# EUROPEAN PATENT APPLICATION

(11) **EP 2 243 712 A1**
(43) Date of publication of application: **27.10.2010**
(21) Application number: 10160786.9
(22) Date of filing: 22.04.2010
(51) Int. Cl.: B65D 6/16

(54) **Container for containing products, system and method for making use of such a container**

(30) Priority: 24.04.2009 NL 2002790
(71) Applicant: Colpac Collapsible Containers B.V., 5656 AE Eindhoven (NL)
(72) Inventor: Megens, Eduardus, Johannes, Wilhelmus. Marinus, 5237 NB, Den Bosch (NL)
(74) Representative: van Oeffelt, Abraham

(57) **Abstract**

The invention relates to a container (9) for containing products, comprising side walls (13,14), a rear wall and a bottom panel (2), which container can be adjusted between an active state and a collapsed state, and wherein the walls are manufactured from a material permeable to radio-frequency waves, such as plastic. In an embodiment the walls comprise at least two metal frame parts (3,4,5,7,8,10,11,12), which frame parts extend only in substantially parallel vertical planes in the active state. The invention also describes a method for reading data associated with goods.

## Description

### Container for containing products, system and method making use of such a container

The present invention relates to a container for containing products. The invention relates more particularly to such a container provided with two opposite side walls, a rear wall connecting the opposite side walls and a bottom panel which can be connected to the walls, wherein the container can be adjusted between an active state, in which the bottom panel, the side walls and the rear wall at least partially enclose a container space, and a collapsed state in which it is folded together such that the side walls are placed at a shorter distance from each other than in the active state. Such containers are known from, among others, the Netherlands patent 1027821 as vertically collapsible container and have the advantage that - when they are not loaded with products - they take up relatively little space and can thus be stored or transported efficiently.

In order to enable managing of a logistical process in which the products are to be transported or stored, it is desirable to provide these products with a readable marking such as a label, a barcode or an RFID. This latter form of marking has the advantage that there need not be any direct visual contact between the marking and the reading equipment in order to read the marking. This increases the options for reading RFIDs and more particularly of RFIDs arranged on a collection of goods and/or the container. A drawback of thus reading RFIDs attached to goods is that for this purpose they must be accessibly displayed for reading by one or more readers. In the case of transport or storage of goods with RFIDs in a vertically collapsible container, the goods must be removed from the container for reading purposes.

It is an object of the present invention to provide a container such that the reading of the RFIDs of products placed in the container can take place in simple and reliable manner. It is a further object of the present invention to also provide a logistical system and a method for simple reading of RFIDs of products placed in the container.

The invention provides for this purpose a container for containing products according to the preamble of claim 1, **characterized in that** the walls are manufactured from a material permeable to radio-frequency waves, such as plastic. The RFIDs present on the products can hereby be read in optimal manner.

In an embodiment the rear wall is provided with at least three hinges for collapsing the rear wall such that the side walls are placed at a shorter distance from each other than in the active state. Such a collapsing method results in a tried and tested and robust construction and in a minimal required space for the container in collapsed state.

Although it is desirable for the reading of RFIDs to avoid metal components, it can nevertheless be advantageous to apply metal because of structural requirements of strength and robustness, possibly in combination with economic advantages. The container according to the present invention is therefore characterized in an embodiment in that the walls comprise metal frame parts, which metal frame parts however extend only in substantially parallel vertical planes in the active state.

After extensive studies and diverse tests it has been found that if the metal frame parts in the walls extend substantially in parallel vertical planes in active state, the reading of RFIDs of products placed in a container of the type stated in the preamble becomes possible without the goods having to be removed from the container for this purpose. The unloading of the container (or opening of the container) before the RFIDs of the products placed in the container are read is thus simplified considerably by the present invention. It is the object here that the reading takes place in a direction parallel to the planes in which the metal parts are situated. In the container according to the invention the radio waves required for reading the RFIDs can exchange information without metal obstructions between the reader and the RFIDs. It is even found possible to identify and read larger numbers of RFIDs placed in a vertically collapsible container with unexpectedly great accuracy. The container according to the present invention is in other words **characterized in that** for reading purposes there are directions in the construction (walls) of the container in which no frame parts extend. It is noted that no restrictions are applied in respect of the use of metal parts in the bottom panel; it is precisely the bottom panel which is heavily loaded and will usually be manufactured for at least a very substantial part from metal.

In an embodiment the frame parts comprise at least one metal upright extending with a vertical directional component. The metal upright increases the strength of the construction, particularly when the metal upright is situated where two wall parts connect to each other. A great strength of the container results in a longer lifespan of the container, good protection of the products placed in the container, and the container can also be more heavily loaded with products. The metal upright can also serve to hold plates/panels and/or an optional top wall. It is of course also possible to apply a plurality of metal uprights, optionally in combination with further construction means such as (fibre-reinforced) plastics.

The frame parts can also comprise a plurality of metal uprights, which are mutually connected by a metal beam extending with a horizontal directional component in the active state. A rigid, strong construction is thus obtained. One or more mutually connected metal uprights and metal beams can also be assembled to form one whole in that they are formed, welded or otherwise connected, such as for instance with a screw, bolt and/or adhesive connection.

In order to increase the strength of the construction of the container, a plurality of metal uprights can be connected to a metal beam extending with a horizontal directional component in the active state. A fence can thus be formed which supports the products and/or the wall panels and provides increased protection from damage caused for instance by the container being externally loaded during storage or transport.

For increased reliability of the reading of the RFIDs of the products placed in the container a further possible option is that only two opposite walls comprise metal frame parts in an active state. Walls particularly suitable for this purpose are the front and rear wall, since the front wall usually comprises a door construction, wherein it is desirable for strength purposes that metal parts can be applied. It is moreover advantageous if the hinges in the rear wall can be manufactured from metal. In this embodiment variant the containers can also be displaced in the usual direction of travel during reading of the RFIDs without the metal parts in the walls having a disruptive effect.

In order to obtain a more robust construction the metal frame parts can be manufactured from substantially U-profile or rectangular tubular profile. Shielding means, preferably chosen from the group of at least a net, membrane, cloth, grid and/or sheet material formed from non-metallic material, can also be applied. The choice for one of these embodiments or a combination thereof can be made per intended application. It is also possible to determine per application whether it is necessary to shield all walls, or whether one or more walls, for instance the top wall (top side), can be open.

In order to prevent the reading of an RFID being impeded because it is situated too close to a metal frame part, it is desirable for the frame parts to be provided with non-metallic spacers for the purpose of holding the RFIDs at a distance from the metal frame parts in the walls. The spacers can be manufactured from plastic and/or from an elastic material, whereby they simultaneously form a mechanical protection. It is also advantageous here for the products to be placed in the container such that RFIDs of adjacent products are located at a mutual distance from each other.

The invention will be further elucidated on the basis of the non-limitative exemplary embodiments shown in the following figures. Herein:
figures 1a-1d show a number of exemplary embodiments of a container according to the present invention;
figure 2 shows a reading device for application with a container according to the present invention;
figure 3 shows a detail view of a part of a container according to the present invention.

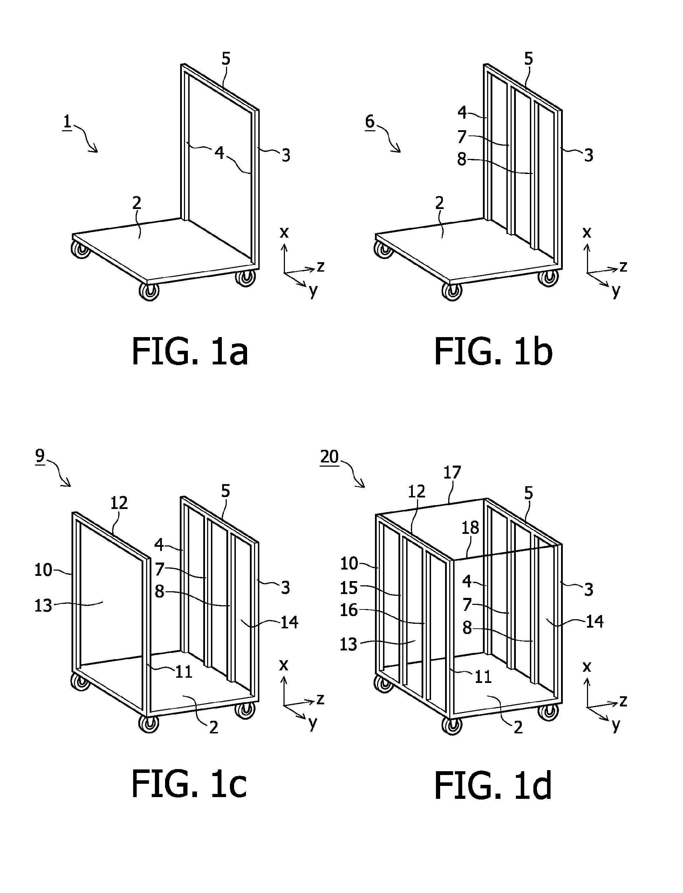

Figure 1a shows a first embodiment of a container 1 according to the present invention. Container 1 is shown for the sake of clarity without side walls and rear wall. A bottom panel 2 and metal frame parts 3, 4 and 5 situated in a side wall are however shown. Metal frame parts 3 and 4 are uprights which are mutually connected by a metal beam 5 extending in horizontal direction in the active state. Metal frame parts 3, 4 and 5 all extend parallel to a plane defined by vectors x and y. During movement of container 1 in a direction z along a reading device RFIDs of products placed in container 1 can be read by exchange of electromagnetic signals in directions parallel to the plane defined by vectors x and y.

Figure 1b shows a second embodiment of a container 6 according to the present invention, wherein another two metal uprights 7 and 8 are placed between metal uprights 3 and 4 (identical to the comparable metal uprights 3, 4 shown in figure 1a) and are likewise connected to metal beam 5. In the shown example metal frame parts 3, 4, 5, 7 and 8 are all manufactured from rectangular tubular profile. It is however also possible to envisage use being made of U-profiles or use being made of rectangular tubular profile, U-profile and optional other profiles, such as profiles with a circular section, or of a combination of such profile parts.

Figure 1c shows yet another embodiment of a container 9 according to the present invention. In this embodiment two opposite walls 13 and 14 comprise metal frame parts 3, 4, 5, 7, 8, 10, 11, 12. Metal uprights 10 and 11 are connected to metal beam 12. Both walls 13, 14 and metal frame parts 3, 4, 5, 7, 8, 10, 11, 12 from which they are erected extend in the x-y plane.

Figure 1d shows yet another embodiment of a container 20 according to the present invention. Compared to the embodiment as shown in figure 1c, wall 13 is also provided with metal uprights 15 and 16. For strengthening purposes walls 13 and 14 are also mutually connected by strengthening parts 17 and 18. These strengthening parts 17 and 18 do not however comprise any metal, as this would impede reading of RFIDs since strengthening parts 17, 18 do not lie parallel to the planes of walls 13 and 14 but in fact lie substantially perpendicularly thereto.

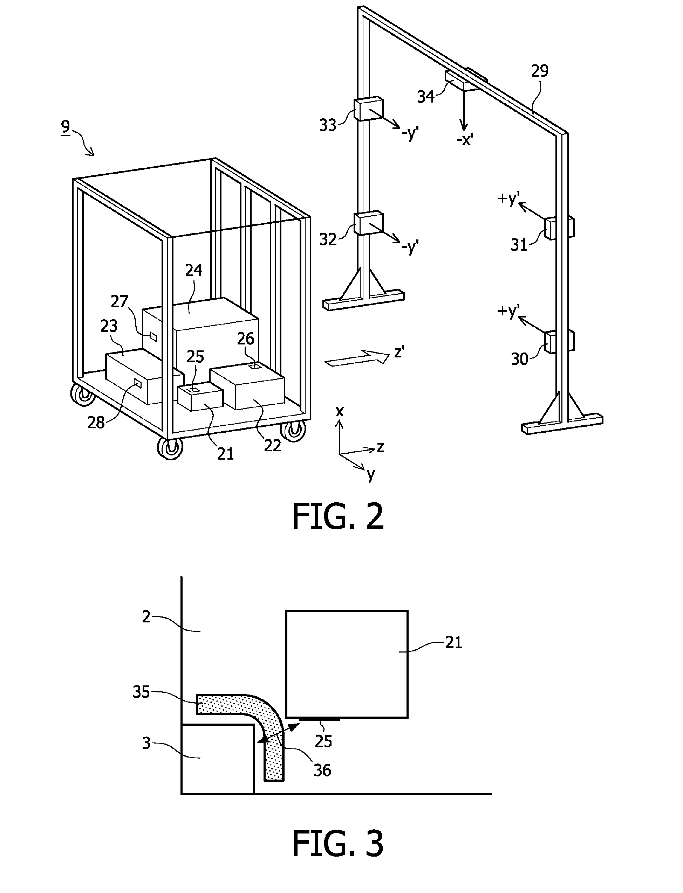

Figure 2 shows container 9 of figure 1c, in the vicinity of a read portal 29 provided with RFID readers 30, 31, 32, 33 and 34. In addition to the shown configuration of the readers, diverse variants of the placing and the number of readers can be applied. Situated in container 9 are products, in the shown case parcels or items of luggage 21, 22, 23, 24, which are provided with respective RFIDs 25, 26, 27, 28. Container 9 is moved in the direction z' through read portal 29. RFID readers 30, 31 here scan in the (positive) y' direction and RFID readers 32 and 33 in the negative y' direction. RFID reader 34 scans in the negative x' direction. All RFID readers 30-34 thus scan the RFID tags 25-29 in a plane parallel to the direction of the x-y plane in which metal frame parts 3, 4, 5, 7, 8, 10, 11, 12, 15, 16 of container 9 extend, this resulting in a very reliable reading and identification of the RFIDs.

In the foregoing figures the shielding means of the respective containers are not shown for the sake of clarity, but they can for instance comprise a net, membrane, cloth, grid and/or a sheeting formed from a non-metallic material.

Figure 3 shows a detail of a container 9 of figure 1d, wherein metal upright 3 is provided with a non-metallic spacer 35 for holding the products at a distance 36 from metal upright 3. It has been found that when the distance 36 amounts to a minimum of 10 mm the reading of the RFIDs takes place with a greater accuracy.

Many variants, all deemed as falling within the scope of protection according to the following claims, can be envisaged in addition to the shown embodiments.

## Claims

1. Container for containing products, comprising:
- two opposite side walls,
- a rear wall connecting the opposite side walls, and
- a bottom panel which can be connected to the walls,
wherein
- the container can be adjusted between an active state, in which the bottom panel, the side walls and the rear wall at least partially enclose a container space, and a collapsed state in which the side walls are placed at a shorter distance from each other than in the active state,
**characterized in that**
- the walls are manufactured from a material permeable to radio-frequency waves, such as plastic.

2. Container as claimed in claim 1, **characterized in that** the rear wall is provided with at least three hinges for collapsing the rear wall such that the side walls are placed at a shorter distance from each other than in the active state.

3. Container as claimed in any of the foregoing claims, **characterized in that** the walls comprise metal frame parts, which metal frame parts extend only in substantially parallel vertical planes in the active state.

4. Container as claimed in claim 3, **characterized in that** the metal frame parts comprise at least one metal upright extending with a vertical directional component.

5. Container as claimed in claim 4, **characterized in that** the metal frame parts comprise a plurality of metal uprights and a metal beam which in the active state extends with a horizontal directional component and which connects at least two metal uprights.

6. Container as claimed in any of the foregoing claims, **characterized in that** of the walls, only two walls that are opposite in the active state comprise metal frame parts.

7. Container as claimed in any of the foregoing claims, **characterized in that** at least one metal frame part is manufactured from substantially U-shaped or rectangular metal tubular profile.

8. Container as claimed in any of the foregoing claims, **characterized in that** the walls comprise shielding means, chosen from the group of at least a net, membrane, cloth, grid and/or a sheeting formed from non-metallic material.

9. Container as claimed in any of the foregoing claims, **characterized in that** a metal frame part is at least partially shielded by a non-metallic spacer for the purpose of holding at a minimal distance products to be placed in the container.

10. System for transport and storage of goods, comprising:
- at least a container as claimed in any of the foregoing claims;
- products placed in a container which are provided with an RFID; and
- reading means located outside the container for reading the RFIDs of the products placed in a container in a single production run.

11. System as claimed in claim 10, **characterized in that** the products are placed in the container such that RFIDs of adjacent products are located at a mutual distance from each other.

12. Method for reading data associated with goods, comprising the processing steps of:
A) marking individual goods with an RFID;
B) loading a collapsible container as claimed in any of the claims 1-8 with the goods; and
C) reading a plurality of RFIDs of goods placed in the container in a single production run using at least one RFID reader.

13. Method as claimed in claim 12, **characterized in that** loading of the container with goods takes place such that an RFID is situated a minimum of 10 mm from a metal frame part.

14. Method as claimed in claim 13, **characterized in that** reading of the RFIDs of a plurality of goods placed in a container comprises of moving the container past the reader.

15. Method as claimed in claim 14, **characterized in that** during reading of a container loaded with goods provided with RFIDs the container is moved substantially linearly relative to the RFID reader in a manner such that at least a vertical plane in which metal frame parts extend extends transversely of the direction of movement during the reading.
